# EUROPÄISCHE PATENTSCHRIFT

(11) **EP 1 001 128 B1**
(45) Veröffentlichungstag und Bekanntmachung des Hinweises auf die Patenterteilung: **11.08.2004**
(21) Anmeldenummer: 99122160.7
(22) Anmeldetag: 05.11.1999
(51) Int. Cl.: E06B 3/66, G01M 3/04, E06B 3/677

(54) **Verfahren zur Zustandsüberprüfung der Gasfüllung im Isolierraum einer Isolierglasscheibe und Isolierglasscheibe**
Insulating glazing unit and method for testing the gas filling the interspace of an insulating glazing unit
Vitrage isolant et procédé pour éprouver le gaz remplissant l'intérieur d'un vitrage isolant

(30) Priorität: 09.11.1998 DE 19851569
(43) Veröffentlichungstag der Anmeldung: 17.05.2000
(73) Patentinhaber: Schwab, Armin Dr.-Ing., 86681 Fünfstetten (DE)
(72) Erfinder: Schwab, Armin Dr.-Ing., 86681 Fünfstetten (DE)
(74) Vertreter: Schlimme, Wolfram, Dr.-Ing.

(56) Entgegenhaltungen:
- WO-A-82/02920
- DE-A- 2 842 465
- DE-A- 19 755 147

## Beschreibung

Die Erfindung betrifft ein Verfahren zur Zustandsüberprüfung der Gasfüllung im Isolierraum einer Isolierglasscheibe sowie eine Isolierglasscheibe umfassend zumindest zwei voneinander beabstandete Glastafeln und einen die Glastafeln im Bereich Ihrer Ränder umgebenden und miteinander verbindenden Randverbund, wobei der Randverbund einen zwischen den Glastafeln gelegenen Isolierraum abdichtend begrenzt und wobei der Isolierraum mit einem von Luft verschiedenen Füllgas befüllt ist.

Derartige Isolierglasscheiben sind allgemein bekannt. Sie erhalten zum Beispiel eine thermische Isolierwirkung durch die Gasfüllung des Isolierraums, der mit einem schlecht wärmeleitenden Gas gefüllt ist und über den Randverbund nach außen abgedichtet ist. Als Füllgas werden häufig Edelgase oder andere Gase oder Gasgemische mit einer sehr niedrigen Wärmeleitfähigkeit verwendet. Im Laufe der Lebensdauer einer Isolierglasscheibe kann es jedoch vorkommen, daß der Randverbund aufgrund der Alterung der in ihm verwendeten Dichtmittel in seiner Abdichtwirkung nachläßt, so daß es zu einem Gasaustausch zwischen dem Isolierraum der Isolierglasscheibe und der sie umgebenden Atmosphäre kommt. Dabei tritt allmählich Luft in den Isolierraum ein, so daß die Isolierwirkung der Isolierglasscheibe aufgrund der gegenüber dem Füllgas besseren Wärmeleitfähigkeit der Luft abnimmt.

Aus der WO 82/02920 ist ein Verfahren zur Zustandsüberprüfung der Gasfüllung im Isolierraum einer Isolierglasscheibe bekannt, wobei ein im Isolierraum der Isolierglasscheibe vorgesehenes Sensormittel der Atmosphäre im Isolierraum der Isolierglasscheibe ausgesetzt ist. Bei diesem Sensormittel handelt es sich um einen Feuchtesensor, der eine Veränderung des Feuchtigkeitsanteils des Füllgases im Luftzwischenraum durch Farbveränderung sichtbar macht. Diese Anzeige der Feuchtigkeit im Gas setzt voraus, daß bei einer Leckage ausreichend feuchte Luft in den Zwischenraum strömt, deren Wasserdampfgehalt so hoch ist, daß er für einen Farbumschlag am Indikator sorgt. Tritt beispielsweise bei sehr niedrigen Außentemperaturen oder in Klimazonen geringer Luftfeuchtigkeit in den Zwischenraum dieser bekannten Isolierglasscheibe trockene Luft durch ein Leck in der Abdichtung ein, so wird kein Farbumschlag am Indikator erfolgen, da der Feuchtigkeitsgehalt in der trockenen Luft nicht für einen Farbumschlag ausreicht. Trotzdem werden durch das Einströmen von Luft in den Zwischenraum die Isoliereigenschaften dieser bekannten Isolierglasscheibe deutlich verschlechtert.

Aus der DE 31 05 740 C2 ist ein Verfahren zum Untersuchen des Füllgases von Isolierglasscheiben bekannt, bei dem die Laufzeit eines Wärmepulses im Füllgas gemessen wird. Hierzu ist an einer Glastafel ein Heizplättchen vorgesehen, welches von einem Stromimpuls beaufschlagt wird und einen Temperatursprung an der Oberfläche des Heizplättchens erzeugt, und an der anderen Glastafel ist ein Empfänger vorgesehen, der den am Heizplättchen erzeugten Temperatursprung erfaßt. Bei vorgegebener Entfernung zwischen Heizplättchen und Empfänger ist die Laufzeit des Temperaturimpulses zwischen Sender und Empfänger ein Maß für die Isolierwirkung. Diese bekannte Messung der Isolierwirkung erfordert einen hohen apparativen Aufwand und kann nur als Qualitätsprüfung bei der Herstellung oder im Rahmen von besonderen Funktionsüberprüfungen durchgeführt werden. Eine kontinuierliche Überwachung der Funktion der Isolierglasscheibe ist hiermit nicht möglich.

Ein anderes Verfahren zur Untersuchung des Füllgases von Isolierglasscheiben ist aus der DE 34 39 216 C1 bekannt. Dort werden die beiden begrenzenden Glastafeln in niederfrequente, mechanische Schwingungen versetzt, wobei charakteristische Schwingungseigenschaften wie Resonanzfrequenz oder Richtgröße bestimmt werden, die wiederum ein Maß für die Isolierwirkung der Isolierglasscheibe darstellen. Auch dieses Verfahren ist mit einem erheblichen apparativen Aufwand verbunden und nicht für eine kontinuierliche Funktionsprüfung geeignet.

Ein weiteres Verfahren zur Untersuchung des Füllgases von Isolierglasscheiben ist aus der DE 34 39 405 C2 bekannt, wobei ein Schallsignal auf eine Glastafel aufgebracht wird und die Fortpflanzungsgeschwindigkeit des Schalls im Scheibenzwischenraum mit einem auf der anderen Glastafel vorgesehenen Empfänger ermittelt wird und wobei aus der Schall-Fortpflanzungsgeschwindigkeit auf die Zusammensetzung des Füllgases und damit auf die Isolierwirkung geschlossen wird. Auch dieses Verfahren eignet sich aufgrund des erforderlichen apparativen Aufwands nicht für eine kontinuierliche Überwachung der Isolierwirkung einer Isolierglasscheibe.

Aufgabe der vorliegenden Erfindung ist es daher, ein Verfahren und eine Vorrichtung anzugeben, die es gestatten, die Isolierwirkung einer Isolierglasscheibe über die Lebensdauer der Isolierglasscheibe im wesentlichen kontinuierlich zu überwachen und festzustellen, wenn sich die Isolierwirkung spürbar verschlechtert.

Der das Verfahren betreffende Teil der Erfindung wird gemäß Anspruch 1 dadurch gelöst, daß ein im Isolierraum der Isolierglasscheibe vorgesehenes Sensormittel der Atmosphäre im Isolierraum ausgesetzt ist und daß das Sensormittel auf eine Änderung der Gaszusammensetzung im Isolierraum in Bezug auf Sauerstoff oder Stickstoff unter Abgabe eines Signals reagiert. Die Integration des Sensormittels in den Verbund der Isolierglasscheibe schafft auf kostengünstige Weise eine einfache Überwachungsmöglichkeit ohne größeren apparativen Aufwand.

Vorzugsweise reagiert das Sensormittel durch eine sichtbare Farbänderung. Die ständige Sichtbarkeit des Sensormittels im Inneren der Isolierglasscheibe ermöglicht in Verbindung mit der Farbänderung ein einfaches Feststellen eines Defektes der Isolierglasscheibe.

In einer besonders bevorzugten Ausführungsform reagiert das Sensormittel auf Sauerstoff oder Stickstoff, wenn dieser einen vorgegebenen Schwellenwert überschreitet.

Dabei reagiert das Sensormittel auf die Anwesenheit von Luftsauerstoff oberhalb einer Schwellenwertkonzentration, wobei die Farbveränderung von außen sichtbar ist und als Zeichen für die sich verschlechternde Isolierwirkung der Isolierglasscheibe dient.

Erfolgt demnach im Laufe der Lebensdauer der Isolierglasscheibe ein Gasaustausch zwischen dem Isolierraum und der äußeren Atmosphäre, so ändert sich die Zusammensetzung des Füllgases oder des Füllgasgemisches, was durch das vom Sensormittel abgegebene Signal angezeigt wird. Das Sensormittel kann dabei entweder auf ein Unterschreiten eines Füllgasbestandteiles oder auf ein Überschreiten eines Luftbestandteils reagieren.

Der die Vorrichtung betreffende Teil der Aufgabe wird gemäß Patentanspruch 4 dadurch gelöst, daß im Isolierraum ein Sensor vorgesehen ist, der bei einer Veränderung der Zusammensetzung des Füllgase in Bezug auf Sauerstoff oder Stickstoff reagiert und ein Signal abgibt.

Vorzugsweise weist der Sensor einen Bestanteil auf, der bei einer Veränderung der Zusammensetzung des Füllgases einer sichtbaren Farbänderung unterliegt.

Die Farbänderung tritt bevorzugt erst bei Überschreiten einer vorgebbaren Schwellenkonzentration von Sauerstoff oder Stickstoff ein.

Besonders vorteilhaft ist es, wenn der Sensor auf der dem Isolierraum zugewandten Innenseite zumindest einer der Glastafeln angebracht ist, wodurch die Sichtbarkeit des Sensors verbessert wird.

Dabei ist der Sensor bevorzugt von einer sich zumindest entlang eines Teils des Randes der Glastafel, vorzugsweise entlang des gesamten Umfangs im Randbereich der Glastafel, erstreckenden Sensorschicht gebildet. Diese Sensorschicht kann beispielsweise durch Siebdruck auf die Glastafel aufgebracht sein. Erstreckt sich die Sensorschicht entlang des gesamten Umfangs im Randbereich der Glastafel, so kann bereits frühzeitig der Ort eines Lecks im Randbereich der Isolierglasscheibe ermittelt werden, da sich die Sensorschicht im Bereich des Lecks aufgrund des hier verstärkt auftretenden Gasaustausches schneller verfärbt.

Der Sensor kann bei einer Veränderung der Zusammensetzung des Füllgases oder des Füllgasgemisches auch ein elektrisches Signal abgeben, das von einer stationären oder mobilen Auswerte- und Anzeigeeinheit außerhalb der Isolierglasscheibe empfangbar ist. Diese Ausgestaltung ermöglicht sowohl eine Fernüberwachung in einem Gebäude mit einer Vielzahl von Isolierglasscheiben, als auch eine Überwachung der Isolierwirkung mittels einer außerhalb der Scheibe angebrachten oder anbringbaren Anzeigeeinheit. Ein derart erzeugtes elektrisches Signal kann außerdem als Alarmsignal bei einer Zerstörung einer der Glastafeln ausgewertet werden, wenn in einem solchen Fall eine besonders abrupte Änderung der Gaszusammensetzung festgestellt wird.

Die Erfindung wird nachfolgend anhand eines Beispiels unter Bezugnahme auf die Zeichnung näher erläutert. In dieser zeigt:
- Fig. 1: eine teilweise geschnittene Darstellung einer erfindungsgemäßen Isolierglasscheibe mit einem Sensor und
- Fig. 2: eine alternative Ausgestaltung der erfindungsgemäßen Isolierglasscheibe.

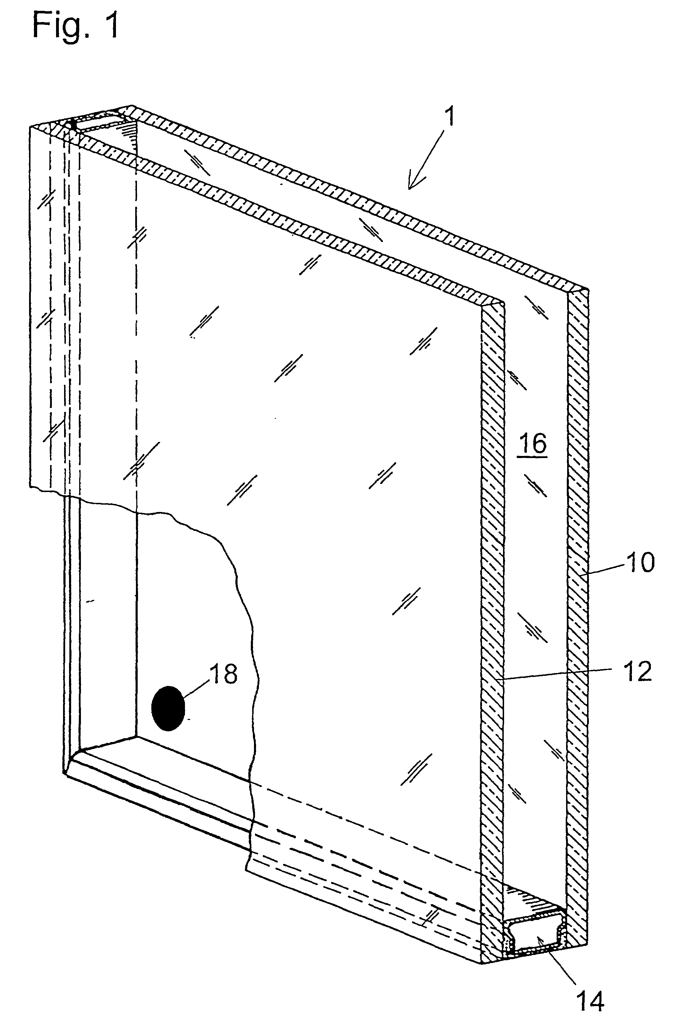

In Fig. 1 ist ein teilweise geschnittener Ausschnitt einer Isolierglasscheibe 1 dargestellt. Die Isolierglasscheibe 1 weist eine innere Glastafel 10 und eine äußere Glastafel 12 auf, die voneinander beabstandet sind. Im Randbereich der Glastafeln 10, 12 ist ein Randverbund 14 vorgesehen, der die Glastafeln 10, 12 in bekannter Weise beabstandet hält und abdichtend miteinander verbindet. Zwischen den Glastafeln 10, 12 ist ein vom Randverbund 14 gegenüber der Umgebung der Isolierglasscheibe 1 hermetisch abgedichteter und begrenzter Isolierraum 16 gebildet, der mit einem Füllgas befüllt ist, welches auch ein Gasgemisch sein kann. Das Füllgas ist von Luft verschieden und enthält Gasbestandteile, die eine sehr niedrige Wärmeleitfähigkeit aufweisen, beispielsweise Edelgase.

Die innere Glastafel 10 ist auf ihrer dem Isolierraum 16 zugewandten Fläche in einem unteren ecknahen Bereich mit einem Sensor 18 versehen. Der Sensor besteht beispielsweise aus einem mittels Siebdruckverfahren auf die Glastafel 10 aufgebrachten chemischen Reagenz, welches auf die Anwesenheit von Sauerstoff mit einem Farbumschlag reagiert.

Ist der Sensor 18 auf der Innenseite der äußeren Glastafel 12 angebracht, so daß seine dem Füllgas im Isolierraum 16 zugewandte Oberfläche durch die innere Glastafel 10, also vom Innenraum eines mit der Isolierglasscheibe 1 versehenen Gebäudes, sichtbar ist, so läßt sich eine leckagebedingte Farbänderung an dieser Oberfläche des Sensors 18 bereits frühzeitig erkennen.

Nachfolgend wird die Funktion des Sensors 18 anhand eines Beispiels erläutert. Wird im Laufe der Lebensdauer der Isolierglasscheibe der Randverbund 14, beispielsweise durch Materialalterung, geringfügig undicht, so findet ein Gasaustausch zwischen dem Isolierraum 16 und der umgebenden Atmosphäre statt. Dabei tritt Füllgas aus dem Isolierraum 16 aus und/oder Luft aus der Umgebungsatmosphäre in den Isolierraum 16 ein. Solange im Isolierraum 16 nur die Füllgasatmosphäre herrscht, in der kein Sauerstoff oder ein anderer Oxidator enthalten sind, besitzt der Sensor 18 eine vorgegebene Farbe. Sobald durch die alterungsbedingten Undichtigkeiten im Randverbund Umgebungsluft in den Isolierraum 16 eintritt, wird durch den in der Umgebungsluft enthaltenen Sauerstoffanteil von etwa 21 Prozent eine Oxidation eines im Sensor 18 enthaltenen Stoff-Bestandteils und damit eine Farbänderung des Sensors 18 hervorgerufen, die einen Hinweis auf die Veränderung der Gaszusammensetzung im Isolierraum 16 liefert. Mit zunehmenden Anstieg des Sauerstoffanteils im Gasgemisch innerhalb des Isolierraums wird der Farbumschlag stärker und deutlicher erkennbar. Alternativ dazu kann der Sensor 18 auch so ausgestaltet sein, daß der Farbumschlag erst oberhalb einer vorgegebenen Sauerstoffkonzentration im Gasgemisch innerhalb des Isolierraums 16 eintritt.

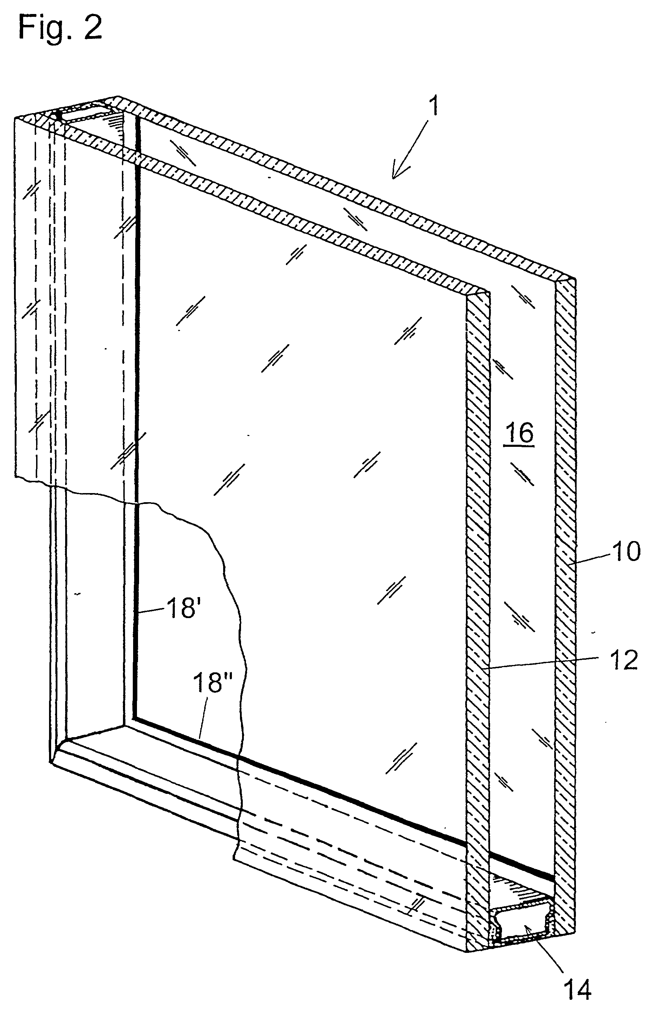

In Fig. 2 ist eine alternative Ausführungsform dargestellt, bei der der Sensor von einer streifenartigen Sensorschicht 18', 18" gebildet ist, die sich entlang des gesamten Umfangs der Glastafel 10 in ihrem Randbereich erstreckt. Diese Ausgestaltung ermöglicht es, auch den Ort des Lecks im Randverbund 14 frühzeitig zu ermitteln, da der Farbumschlag der Sensorschicht im Bereich des Lecks stärker und frühzeitiger auftreten wird.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Der Sensor oder das Sensormittel kann alternativ auch so ausgebildet sein, daß eine Änderung der Zusammensetzung des Füllgases eine Formänderung zumindest eines Teils des Sensors bewirkt. Eine derartige Formänderung kann beispielsweise durch Schrumpfen, Ausdehnen, Einbauchen oder ähnliches hervorgerufen werden. Des weiteren kann eine Änderung der Zusammensetzung des Füllgases auch eine Lageänderung zumindest eines Teils des Sensors bewirken. Derartige Lageänderungen können beispielsweise durch Strecken, Heben, Senken, Drehen, Kippen oder ähnliches herbeigeführt werden. In einer weiteren alternativen Ausbildungsform der Erfindung kann eine Änderung der Zusammensetzung des Füllgases auch eine Zustandsänderung zumindest eines Teils des Sensors bewirken, wobei eine derartige Zustandänderung durch einen Übergang zwischen den Phasen fest, flüssig oder gasförmig gekennzeichnet ist.

Anstelle der Anordnung des Sensors oder des Sensormittels auf einer Oberfläche zumindest einer der beiden Glastafeln kann der Sensor oder das Sensormittel auch auf der zum Isolierraum 16 zugewandten Seite des Randverbundes 14, insbesondere auf einem zum Randverbund gehörenden Randabstandshalter oder auf einer am Randverbund angeordneten Konsole vorgesehen sein. Es ist ebenso möglich, das Sensormittel auf einem fadenartigen Gebilde anzuordnen, welches im Isolierraum 16 aufgespannt ist.

In einer weiteren alternativen Ausgestaltung der Erfindung kann der Sensor auch als Einsteck- oder Einschiebeteil ausgebildet sein, welches den Randverbund von außen nach innen, zum Isolierraum 16 hin, durchdringt. So kann der Sensor beispielsweise gleichzeitig als Verschlußstopfen oder Ventil für eine Füllgas-Nachfüllöffnung dienen, wobei das Sensormittel am in den Isolierraum 16 eindringenden Abschnitt des Verschlußstopfens bzw. des Ventils vorgesehen ist.

Ebenfalls ist die Ausgestaltung des Sensors als flächiger Stopfen möglich, der in eine Bohrung im Randverbund 14 eingesetzt ist, wobei der zum Isolierraum 16 hin offene Stopfen in seiner Öffnung das Sensormittel enthält, welches beispielsweise dort als Substrat eingebracht ist. Vorteilhaft ist dabei, wenn der Stopfen zumindest in dem Bereich, in dem das Sensormittel aufgenommen ist, aus einem transparenten Material besteht.

Das erfindungsgemäße Verfahren kann auch als Qualitätskontrolle und Qualitätsnachweis bei der Herstellung der Isolierglasscheibe dienen und beispielsweise fabrikationsbedingtes unzureichendes Befüllen anzeigen.

Grundsätzlich ist das erfindungsgemäße Verfahren nicht nur auf eine Isolierglasscheibe anwendbar, sondern läßt sich auch auf andere gasgefüllte transparente oder nichttransparente fluid- oder gasgefüllte Hohlräume anwenden, bei denen eine Überwachung der Befüllung erforderlich ist und bei denen direkt oder indirekt Blickkontakt zum Sensor oder zum Sensormittel besteht.

Insbesondere kann es sich bei der Gasfüllung der Scheibenanordnung auch um ein Gas oder Gasgemisch handeln, das einer anderweitigen Funktion als der thermischen Isolierung dient. So kann beispielsweise auch ein Füllgas wie Schwefelfluorid (SF₆) vorgesehen sein, das eine Schallisolierung bewirkt, oder ein anderes Funktionsgas, das anstelle einer isolierenden Funktion beispielsweise eine optisch wirkende Funktion erfüllt.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Verfahren zur Zustandsüberprüfung der Gasfüllung im Isolierraum (16) einer Isolierglasscheibe (1),
- wobei ein im Isolierraum (16) der Isolierglasscheibe (1) vorgesehenes Sensormittel (18; 18'; 18") der Atmosphäre im Isolierraum (16) der Isolierglasscheibe (1) ausgesetzt ist
**dadurch gekennzeichnet,**
- **daß** das Sensormittel (18; 18'; 18") auf eine Änderung der Gaszusammensetzung im Isolierraum (16) in Bezug auf Sauerstoff oder Stickstoff unter Abgabe eines Signals reagiert.

2. Verfahren nach Anspruch 1,
**dadurch gekennzeichnet,**
- **daß** das Sensormittel (18; 18'; 18'') durch Farbänderung reagiert.

3. Verfahren nach Anspruch 1 oder 2,
**dadurch gekennzeichnet,**
- **daß** das Sensormittel (18; 18'; 18") auf Sauerstoff oder Stickstoff reagiert, wenn dieser einen vorgegebenen Schwellenwert überschreitet.

4. Isolierglasscheibe (1) umfassend
- zumindest zwei voneinander beabstandete Glastafeln (10, 12) und
- einen die Glastafeln (10, 12) im Bereich ihrer Ränder umgebenden und miteinander verbindenden Randverbund (14),
- wobei der Randverbund (14) einen zwischen den Glastafeln (10, 12) gelegenen Isolierraum (16) abdichtend begrenzt und
- wobei der Isolierraum (16) mit einem von Luft verschiedenen Füllgas befüllt ist,
**dadurch gekennzeichnet,**
- **daß** im Isolierraum (16) ein Sensor (18; 18'; 18") vorgesehen ist, der bei einer Veränderung der Zusammensetzung des Füllgases in Bezug auf Sauerstoff oder Stickstoff reagiert und ein Signal abgibt.

5. Isolierglasscheibe nach Anspruch 4,
**dadurch gekennzeichnet,**
- **daß** der Sensor (18; 18'; 18") einen Bestandteil aufweist, der bei einer Veränderung der Zusammensetzung des Füllgases einer sichtbaren Farbänderung unterliegt.

6. Isolierglasscheibe nach Anspruch 5,
**dadurch gekennzeichnet,**
- **daß** die Farbänderung erst bei Überschreiten einer vorgegebenen Schwellenkonzentration von Sauerstoff oder Stickstoff eintritt.

7. Isolierglasscheibe nach einem der vorhergehenden Ansprüche,
**dadurch gekennzeichnet,**
- **daß** der Sensor (18; 18'; 18") auf der dem Isolierraum (16) zugewandten Innenseite zumindest einer der Glastafeln (10, 12) angebracht ist.

8. Isolierglasscheibe nach Anspruch 7,
**dadurch gekennzeichnet,**
- **daß** der Sensor (18; 18'; 18") von einer sich zumindest entlang eines Teils des Randes der Glastafel (10), vorzugsweise entlang des gesamten Umfangs im Randbereich der Glastafel (10), erstreckenden Sensorschicht gebildet ist.

9. Isolierglasscheibe nach Anspruch 4,
**dadurch gekennzeichnet,**
- **daß** der Sensor bei der Veränderung der Zusammensetzung des Füllgases ein elektrisches Signal abgibt, das von einer stationären oder mobilen Auswerte- und Anzeigeeinheit außerhalb der Isolierglasscheibe (1) empfangbar ist.

## Claims

1. Method of checking the state of the gas filling in the insulating space (16) of an insulating glazing unit (1),
- wherein a sensing means (18; 18'; 18") provided in the insulating space (16) of the insulating glazing unit (1) is exposed to the atmosphere in the insulating space (16) of the insulating glazing unit (1)
**characterized in**
- **that** the sensing means (18; 18'; 18") reacts to an oxygen- or nitrogen-related change of the gas composition in the insulating space (16) by releasing a signal.

2. Method according to claim 1,
**characterized in**
- **that** the sensing means (18; 18'; 18") reacts by changing colour.

3. Method according to claim 1 or 2,
**characterized in**
- **that** the sensing means (18; 18'; 18") reacts to oxygen or nitrogen when the oxygen or nitrogen exceeds a defined threshold value.

4. Insulating glazing unit (1) comprising
- at least two mutually spaced-apart glass sheets (10, 12) and
- an edge connector (14), by means of which the glass sheets (10, 12) are surrounded and connected to one another in the region of their edges,
- wherein the edge connector (14) delimits and seals off an insulating space (16) situated between the glass sheets (10, 12) and
- wherein the insulating space (16) is filled with a filling gas other than air,
**characterized in**
- **that** in the insulating space (16) a sensor (18; 18'; 18") is provided, which in the event of an oxygen- or nitrogen-related variation of the composition of the filling gas reacts and releases a signal.

5. Insulating glazing unit according to claim 4,
**characterized in**
- **that** the sensor (18; 18'; 18") comprises a component part, which in the event of a variation of the composition of the filling gas undergoes a visible change of colour.

6. Insulating glazing unit according to claim 5,
**characterized in**
- the change of colour occurs only when a defined threshold concentration of oxygen or nitrogen is exceeded.

7. Insulating glazing unit according to one of the preceding claims,
**characterized in**
- **that** the sensor (18; 18'; 18") is attached to the inner side of at least one of the glass sheets (10, 12) facing the insulating space (16).

8. Insulating glazing unit according to claim 7,
**characterized in**
- **that** the sensor (18; 18'; 18") is formed by a sensor layer, which extends at least along part of the edge of the glass sheet (10), preferably along the entire periphery in the edge region of the glass sheet (10).

9. Insulating glazing unit according to claim 4,
**characterized in**
- **that** the sensor upon the variation of the composition of the filling gas releases an electrical signal, which is receivable by a stationary or mobile evaluation and display unit outside of the insulating glazing unit (1).

## Revendications

1. Procédé pour vérifier l'état du remplissage de gaz dans le volume isolant (16) d'un vitrage isolant (1),
dans lequel un moyen détecteur (18 ; 18' ; 18") prévu dans le volume isolant (16) du vitrage isolant (1) est exposé à l'atmosphère dans le volume isolant (16) du vitrage isolant (1),
**caractérisé en ce que** le moyen détecteur (18 ; 18' ; 18") réagit par émission d'un signal à une modification de la composition gazeuse dans le volume isolant (16) par rapport à l'oxygène ou à l'azote.

2. Procédé selon la revendication 1, **caractérisé en ce que** le moyen détecteur (18 ; 18' ; 18") réagit par changement de couleur.

3. Procédé selon l'une ou l'autre des revendications 1 et 2, **caractérisé en ce que** le moyen détecteur (18 ; 18' ; 18") réagit à l'oxygène ou à l'azote lorsque celui-ci dépasse une valeur seuil prédéterminée.

4. Vitrage isolant (1), comportant
- au moins deux panneaux de verre (10, 12) écartés l'un de l'autre, et
- une jonction de bord (14) entourant et reliant l'un à l'autre les panneaux de verre (10, 12) dans la zone de leurs bords,
- la jonction de bord (14) limitant avec étanchement un volume isolant (16) situé entre les panneaux de verre (10, 12), et
- le volume isolant (16) étant rempli d'un gaz de remplissage différent de l'air,
**caractérisée en ce qu'**un détecteur (18 ; 18' ; 18") est prévu dans le volume isolant (16), qui réagit lors d'une modification de la composition du gaz de remplissage par rapport à l'oxygène ou à l'azote et qui émet un signal.

5. Vitrage isolant selon la revendication 4, **caractérisé en ce que** le détecteur (18 ; 18' ; 18") comprend un composant qui, lors d'une modification de la composition du gaz de remplissage, subit un changement de couleur visible.

6. Vitrage isolant selon la revendication 5, **caractérisé en ce que** le changement de couleur apparaît uniquement lors du dépassement d'une concentration seuil prédéterminée de l'oxygène ou de l'azote.

7. Vitrage isolant l'une des revendications précédentes, **caractérisé en ce que** le détecteur (18 ; 18' ; 18") est agencé sur le côté intérieur, tourné vers le volume isolant (16), de l'un au moins des panneaux de verre (10, 12).

8. Vitrage isolant selon la revendication 7, **caractérisé en ce que** le détecteur (18 ; 18' ; 18") est formé par une couche de détection qui s'étend au moins le long d'une partie du bord du panneau de verre (10), de préférence le long de la totalité de la périphérie dans la zone de bord du panneau de verre (10).

9. Vitrage isolant selon la revendication 4, **caractérisé en ce que** lors de la modification de la composition du gaz de remplissage, le détecteur émet un signal électrique qui est susceptible d'être reçu par une unité d'évaluation et d'affichage stationnaire ou mobile située à l'extérieur du vitrage isolant (1).
